(19) Europäisches Patentamt European Patent Office Office européen des brevets

(11) **EP 3 648 974 B1**

(12) **EUROPÄISCHE PATENTSCHRIFT**

(45) Veröffentlichungstag und Bekanntmachung des Hinweises auf die Patenterteilung:
**25.08.2021 Patentblatt 2021/34**

(21) Anmeldenummer: **18733889.2**

(22) Anmeldetag: **02.07.2018**

(51) Int Cl.:
**B32B 37/00** *(2006.01)*     **B32B 38/00** *(2006.01)*
**B32B 5/18** *(2006.01)*

(86) Internationale Anmeldenummer:
**PCT/EP2018/067790**

(87) Internationale Veröffentlichungsnummer:
**WO 2019/007898 (10.01.2019 Gazette 2019/02)**

(54) **VERFAHREN ZUR HERSTELLUNG VON VERBUNDELEMENTEN MIT GEZIELTEM AUFTRAGEN EINES HAFTVERMITTLERS**

METHOD FOR THE PRODUCTION OF COMPOSITE ELEMENTS WITH A SPECIFIC APPLICATION OF AN ADHESION PROMOTER

PROCÉDÉ DE FABRICATION D'ÉLÉMENTS COMPOSITES AVEC APPLICATION CIBLÉE D'UN ADHÉSIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.07.2017 EP 17180272**

(43) Veröffentlichungstag der Anmeldung:
**13.05.2020 Patentblatt 2020/20**

(73) Patentinhaber: **Covestro Intellectual Property GmbH & Co. KG
51373 Leverkusen (DE)**

(72) Erfinder: **FRANKEN, Klaus
51467 Bergisch Gladbach (DE)**

(74) Vertreter: **Levpat
c/o Covestro AG
Gebäude 4825
51365 Leverkusen (DE)**

(56) Entgegenhaltungen:
**EP-A2- 1 736 324     EP-B1- 1 593 438**

**Beschreibung**

Die vorliegende Erfindung betrifft ein Verfahren zur Herstellung von Verbundelementen (wie z.B. offenbart in EP1593438), umfassend die Schritte: 1) Bereitstellen einer Deckschicht; 2) Auftragen einer Haftvermittlerkomponente auf die Deckschicht, wobei die Haftvermittlerkomponente einen Ein-Komponenten-Haftvermittler und/oder eine zu einem Haftvermittler reagierende erste Reaktionsmischung umfasst und 3) Auftragen einer zu einem Polyurethan-/Polyisocyanurat-Schaum reagierenden zweiten Reaktionsmischung auf die Deckschicht, so dass die auf die Deckschicht aufgetragene Haftvermittlerkomponente wenigstens teilweise von der zweiten Reaktionsmischung kontaktiert wird.

Verbundelemente aus einer Deckschicht und einem Isolierkern werden heutzutage in vielen Industriebereichen eingesetzt. Der grundlegende Aufbau solcher Verbundelemente besteht dabei aus einer Deckschicht, auf welche ein isolierend wirkender Werkstoff aufgebracht wird. Als Deckschichten können dabei beispielsweise Bleche aus beschichtetem Stahl, Edelstahl, Aluminium, Kupfer oder Legierungen der beiden letztgenannten eingesetzt werden. Darüber hinaus können auch Dämmplatten aus einer Kombination aus Deckschichten und Isolierkern hergestellt werden. Es können Kunststofffolien, Aluminiumfolien, Holz, Glasfaser- oder Mineralfaservliese sowie cellulosehaltige Materialien wie Papier, Pappe oder Pappmaschee als Deckschichtmaterialien eingesetzt werden. Oft werden Mehrschichtdeckschichten aus z.B. Aluminium und Papier verwendet. Die Wahl des geeigneten Deckschichtmaterials hängt dabei von dem beabsichtigten Einsatzgebiet der Verbundelemente oder Dämmplatte und den sich daraus ergebenden Materialanforderungen ab. Als Isolierkern können insbesondere Schaumstoffe auf Basis von Polyurethan (PUR) und/oder Polyisocyanurat (PIR) eingesetzt werden. Bei den Polyurethan-/Polyisocyanurat-Schäumen für die oben beschriebenen Anwendungen handelt es sich insbesondere um PUR-Hartschäume bzw. PUR/PIR-Hartschäume. In dieser Anmeldung soll die Bezeichnung Polyurethan-/Polyisocyanurat-Schaum bzw. -Schäume einzeln oder gemeinsam Schaumstoffe auf Basis von Polyurethan (PUR) und/oder Polyisocyanurat (PIR) und insbesondere Hartschäume bezeichnen.

Dämmplatten werden häufig im Haus- oder Wohnungs-Bau eingesetzt. Neben der Verwendung von Verbundelementen zur Isolierung von beispielsweise Kühlhäusern finden sie auch immer häufiger Anwendung als Fassadenelemente an Gebäuden oder als Elemente von Industrietüren wie beispielsweise Sektionaltore. Entsprechende Verbundelemente, im Folgenden auch als Sandwich-Verbundelemente bezeichnet, zeigen durch ihre Deckschicht eine dem verwendeten Material entsprechende Stabilität und Oberflächengestaltung, während der aufgebrachte Schaumstoff entsprechende wärmeisolierende Eigenschaften verleiht.

Zur Herstellung entsprechender Dämmplatten oder Verbundelemente wird auf eine bereitgestellte Deckschicht ein schäumendes Reaktionsgemisch mittels einer Auftragsvorrichtung aufgebracht. Hierzu werden zum Beispiel bei der Verwendung von Schaumstoffen auf Basis von Isocyanaten die entsprechenden Polyol-Komponenten und Isocyanat-Komponenten miteinander gemischt und auf die Deckschicht aufgetragen, auf welcher sie aufschäumen und aushärten.

Insbesondere die Verarbeitung von PIR-Schäumen erfolgt üblicherweise unter Zusatz von Haftvermittlern, wobei vor allem Zwei-Komponenten (2K)-Polyurethan-Haftvermittlersysteme etabliert sind. Die Haftfestigkeiten durch Einsatz solcher 2K-Haftvermittlersysteme werden prinzipiell deutlich verbessert. Dieses bedeutet für die Hersteller der Fertigteile eine Produktverbesserung in der Weise, dass die Langzeitrisiken für ein Haftungsversagen massiv reduziert werden.

In diesem Zusammenhang offenbart beispielsweise EP 1 516 720 A1 die Verwendung eines Polyurethan-Haftvermittlers zur Verbesserung der Haftung zwischen den Schichten eines Verbundelements, enthaltend einen Polyisocyanurat-Schaumstoff und Deckschichten, sowie die Verbundelemente als solche und ein Verfahren zu ihrer Herstellung. Bei dem verwendeten Haftvermittler handelt es sich um einen aus dem Stand der Technik bekannten Haftvermittler auf Polyurethanbasis mit einer Dichte von 400 bis 1200 g/l. Dieser Haftvermittler ist im Allgemeinen erhältlich durch Umsetzung von Polyisocyanaten mit Verbindungen mit zwei gegenüber Isocyanaten reaktiven Wasserstoffatomen, wobei das Umsetzungsverhältnis so gewählt wird, dass im Reaktionsgemisch das Verhältnis von Anzahl an Isocyanatgruppen zu Anzahl an gegenüber Isocyanaten reaktiven Gruppen 0,8 bis 1,8:1, bevorzugt 1 bis 1,6:1 beträgt. Bevorzugte Ausführungsformen betreffen die Verwendung von reaktivem 2K-Polyurethan-Haftvermittler, welcher beim Zusammenbringen von Schaumstoffschicht und Deckschicht noch reaktionsfähig ist.

Das Auftragen des Haftvermittlers auf die Deckschicht erfolgt häufig mittels eines rotierenden Tellers, welcher Tropfen der kurz zuvor hergestellten 2K-Reaktionsmischung auf der Deckschicht verteilt. Ein solches Verfahren ist unter anderem in DE 10 2004 022677 A1 beschrieben. Offenbart wird eine Vorrichtung zur Herstellung von Sandwich-Verbundelementen, wenigstens bestehend aus zwei Zuführvorrichtungen für Deckschichten, an die eine Auftragsvorrichtung für einen Haftvermittler, eine Auftragsvorrichtung für eine Kernschicht, eine Fördervorrichtung und eine Ablängvorrichtung hintereinander geschaltet sind, wobei die Auftragsvorrichtung für den Haftvermittler wenigstens aus einer Zuführleitung für den Haftvermittler, einem Drehteller mit mindestens einer seitlichen Austrittsöffnung sowie einem Antrieb für den Drehteller besteht.

EP 1 736 324 A2 betrifft ein Verfahren zum Herstellen eines beliebigen Musters aus einer metallischen oder metallisierten Schicht auf der Oberfläche eines Substrats aus Papier, Kunststoff, Metall, Glas, Holz oder dergleichen, wobei zunächst ein digitaler, das Muster beschreibender Datensatz erstellt wird, dann unter Verwendung des digitalen Datensatzes mit Hilfe eines digitalen Druckverfahrens ein aktivierbarer Haftvermittler bereichsweise und passerhaltig mit dem herzustellenden Muster auf die Oberfläche des Substrats digital gedruckt wird, so dass eine Überlappung der Druckpunkte erreicht wird, wodurch der Haftvermittler als glatte, ebene Schicht auf dem Substrat aufgetragen ist, dann die metallische oder metallisierte Schicht großflächig und mit Kontakt auf die Oberfläche des Substrats aufgebracht wird, dann der Haftvermittler aktiviert wird, um ein Verkleben der metallischen oder metallisierten Schicht mit der Oberfläche des Substrats im Bereich des herzustellenden Musters zu erreichen und dann die metallische oder metallisierte Schicht großflächig abgehoben wird, wobei die verklebten Bereiche auf dem Substrat zurückbleiben.

WO 2008/031517 A1 offenbart eine Vorrichtung zum Auftragen von Substanz auf flächige Substrate, insbesondere auf Textilien, Teppiche, Folien, umfassend wenigstens eine Auftragungsstation, die die Substanz in Breitenrichtung und Längsrichtung auf das Substrat aufträgt, wobei die Auftragungsstation mit einer das Substrat aufnehmenden Einrichtung und mit einer Trageinrichtung ausgestattet ist, die sich zumindest im Wesentlichen über die Substratbreite erstreckt und wenigstens einen Substanzspritzkopf aufweist, der durch eine stationäre Anordnung von über die gesamte Auftragungsbreite verteilt vorgesehenen Spritzdüsen gebildet ist, und wobei die Spritzkopf-Trageinrichtung und das Substrat in Richtung des Längsauftrags relativ bewegbar zueinander angeordnet sind. Die Spritzkopf-Trageinrichtung mit den über die Auftragungsbreite verteilt angeordneten Spritzdüsen und eine das Substrat aufnehmende Fläche der Substrat-Aufnahme-Einrichtung sind relativ zueinander höhenverlagerbar mittels wenigstens einer Hebeeinrichtung derart angeordnet, dass der Substanzspritzkopf in wenigstens eine Auftragungs-Arbeitsposition und in wenigstens eine die stationären Düsen längs der Trageinrichtung zur Wartung freigebende Position gelangt.

EP 2 002 898 A1 offenbart eine Auftragungseinrichtung zum Auftragen von Fluid auf ein Substrat, umfassend eine Reihenanordnung von Ventileinrichtungen, die jeweils mit einer Auftragungs-Ventildüse zum Abstrahlen des Fluids unter Druck und mit zugehöriger Ventilbetätigungseinrichtung zum Steuern der Fluidabstrahlung durch Schließen und Öffnen der Auftragungs-Ventildüsen ausgestattet sind, und umfassend eine mit dem Fluid druckbeaufschlagbare gemeinsame Verteilungs-Fluidkammer, die die Auftragungs-Ventileinrichtungen zum Beaufschlagen mit dem Fluid miteinander verbindet, wobei die Verteilungs-Fluidkammer mit einem Fluideinlasskanal versehen ist, der so angeordnet ist, dass das in der Verteilungs-Fluidkammer unter Druck stehende Fluid längs der Reihe der Auftragungs-Ventileinrichtungen auf diese verteilt wird, dadurch gekennzeichnet, dass wenigstens dem einen Fluideinlasskanal der Verteilungs-Fluidkammer wenigstens eine Reinigungs-Ventileinrichtung zugeordnet ist, die zur Verbindung mit der Verteilungs-Fluidkammer in die Reihenanordnung der Auftragungs-Ventileinrichtungen eingegliedert ist und mit einer Reinigungs-Ventildüse sowie mit zugehöriger Ventilbetätigungseinrichtung zum Schließen bzw. Öffnen der Reinigungs-Ventildüse ausgestattet ist, wobei in der Verteilungs-Fluidkammer zwischen dem Fluideinlasskanal und der wenigstens einen zugeordneten Reinigungs-Ventileinrichtung eine bei geöffneter Reinigungs-Ventildüse wirksame Strömungsstrecke zum Reinigen der gemeinsamen Verteilungs-Fluidkammer gebildet ist.

Der Auftrag des Haftvermittlers mittels eines Drehtellers auf die Deckschicht in der Herstellung von Schaum-Verbundelementen hat mehrere Nachteile. Eine genaue Steuerung des Auftragsbildes hinsichtlich Schichtdicke, Muster oder Gleichmäßigkeit ist schwierig oder unmöglich. Eine zeitlich unveränderte Qualität des Auftrags ist wegen der Anhaftungen von ausreagiertem Haftvermittler auf dem Drehteller auch schwer zu erreichen. Der Auftrag des Haftvermittlers ist nicht ressourceneffizient, da durch den sogenannten Overspray über die Deckschicht hinaus Material verteilt wird. Durch die Wurfbahn des vom Drehteller aufgetragenen Materials können bei profilierten Deckschichten nicht benetzte Bereiche (Wurfschatten) entstehen. Es existiert ferner immer eine Altersverteilung des aufgebrachten Haftvermittlers durch die Geometrie des Drehtellers. Das Einstellen eines konstanten "Alters" oder Reaktionsstadiums des Haftvermittlers über die Breite der Deckschicht ist nicht möglich. Schließlich können aufgrund der weiten Flugbahn des Haftvermittlers beim Drehteller leicht Aerosole entstehen und es kann zu starken Verunreinigungen (Spritzen) der Anlage kommen. Die Verteilqualität auf der Deckschicht hängt auch von der Bandgeschwindigkeit der Deckschicht ab. Ein Drehteller lässt sich daran nur begrenzt anpassen.

Die vorliegende Erfindung hat sich die Aufgabe gestellt, wenigstens einen Nachteil im Stand der Technik zumindest teilweise zu beheben. Insbesondere hat sie sich die Aufgabe gestellt, ein Verfahren zur Herstellung von Verbundelementen anzugeben, bei dem der Auftrag des Haftvermittlers effizienter gestaltet werden kann.

Erfindungsgemäß gelöst wird die Aufgabe durch ein Verfahren gemäß Anspruch 1 und ein System gemäß Anspruch 15. Vorteilhafte Weiterbildungen sind in den Unteransprüchen angegeben. Sie können beliebig kombiniert werden, sofern sich aus dem Kontext nicht eindeutig das Gegenteil ergibt.

Ein Verfahren zur Herstellung von Verbundelementen umfasst die Schritte:

1) Bereitstellen einer ersten Deckschicht;

2) Auftragen einer Haftvermittlerkomponente auf die erste Deckschicht, wobei die Haftvermittlerkomponente einen Ein-Komponenten-Haftvermittler und/oder eine zu einem Haftvermittler reagierende erste Reaktionsmischung umfasst

und wobei die erste Reaktionsmischung aus einer Mehrzahl von Komponenten erhalten wird, wobei wenigstens eine Isocyanat-Komponente und wenigstens eine gegenüber Isocyanaten reaktive Komponente hierfür eingesetzt werden;

3) Auftragen einer zu einem Polyurethan-/Polyisocyanurat-Schaum reagierenden zweiten Reaktionsmischung auf die erste Deckschicht, so dass die auf die erste Deckschicht aufgetragene Haftvermittlerkomponente wenigstens teilweise von der zweiten Reaktionsmischung kontaktiert wird.

Die Haftvermittlerkomponente wird in einem vorbestimmten Muster auf die erste Deckschicht aufgetragen.

Für den Fall, dass in Schritt 2) ein Ein-Komponenten-Haftvermittler aufgetragen wird, wird der Ein-Komponenten-Haftvermittler in Form einzelner Tropfen, auf Anweisung einer Steuereinheit, aus einer Düse ausgestoßen, bis das vorbestimmte Muster aufgetragen ist.

Für den Fall, dass in Schritt 2) eine erste Reaktionsmischung aufgetragen wird, umfasst das Auftragen der ersten Reaktionsmischung auf die erste Deckschicht in Schritt 2) die Schritte:

2a) Auftragen eines Tropfens einer ersten Komponente ausgewählt aus denjenigen Komponenten, welche für die erste Reaktionsmischung eingesetzt werden, entsprechend dem vorbestimmten Muster, auf die erste Deckschicht;

2b) Auftragen eines Tropfens einer weiteren Komponente ausgewählt aus denjenigen Komponenten, welche für die erste Reaktionsmischung eingesetzt werden, entsprechend dem vorbestimmten Muster, auf einen zuvor aufgetragenen Tropfen einer anderen Komponente der ersten Reaktionsmischung, so dass ein zuvor aufgetragener Tropfen einer anderen Komponente zumindest teilweise kontaktiert wird;

2c) Wiederholen der Schritte 2a) und 2b), bis das vorbestimmte Muster unter Einsatz aller Komponenten der ersten Reaktionsmischung aufgetragen ist;

wobei in Schritt 2a) und/oder Schritt 2b) das Auftragen der Tropfen derart erfolgt, dass auf Anweisung einer Steuereinheit ein einzelner Tropfen aus einer Düse ausgestoßen wird.

Als erste Deckschicht eignen sich beispielsweise Metallbleche oder -folien, insbesondere Aluminiumbleche oder -folien, Mehrschichtdeckschichten, zum Beispiel aus Aluminium und Papier, und Kunststoff-Folien. Die Breite der ersten Deckschicht ist grundsätzlich nicht beschränkt. Beispielsweise kann die erste Deckschicht eine Breite zwischen 1000 und 1300 mm aufweisen, aber auch 2400 mm Breite sind möglich.

Die zu einem Polyurethan-/Polyisocyanurat-Schaum reagierende zweite Reaktionsmischung umfasst eine Isocyanat-reaktive Komponente, beispielsweise ein Polyol, ein Polyisocyanat, gegebenenfalls Additive wie z. B. Stabilisatoren und Katalysatoren, gegebenenfalls ein oder mehrere Flammschutzmittel und ein (oder mehrere) Treibmittel.

Das Polyol umfasst insbesondere eine Basis-Polyolkomponente ausgewählt aus der Gruppe bestehend aus Polyetherpolyolen, Polyesterpolyolen, Polyetheresterpolyolen, Polycarbonatpolyolen und/oder Polyether-Polycarbonatpolyolen und Mischungen dieser Polyole. Die OH-Zahl des eingesetzten Polyols oder der eingesetzten Polyole kann beispielsweise > 100 mg KOH/g bis < 800 mg KOH/g betragen und die durchschnittliche OH-Funktionalität des eingesetzten Polyols oder der der eingesetzten Polyole ist ≥ 2. Die OH-Zahl gibt im Falle eines einzelnen zugesetzten Polyols dessen OH-Zahl an. Im Falle von Mischungen wird die mittlere OH-Zahl angegeben. Dieser Wert kann anhand von DIN 53240 bestimmt werden. Die durchschnittliche OH-Funktionalität der Polyole liegt beispielsweise in einem Bereich von ≥ 2 bis < 6.

Die Basis-Polyolkomponente, wenn eingesetzt für PIR-Schäume, besitzt bevorzugt Funktionalitäten von ≥1,2 bis ≤ 3,5, insbesondere ≥1,6 bis ≤ 2,4 und weist eine Hydroxylzahl zwischen 100 bis 300 mg KOH/g, bevorzugt 150 bis 270 mg KOH/g und insbesondere bevorzugt von 160 - 260 mg KOH/g auf. Vorzugsweise besitzt die Basis-Polyolkomponente mehr als 70 mol%, bevorzugt mehr als 80 mol%, insbesondere mehr als 90 mol% primäre OH-Gruppen. Der Anteil an Basis-Polyolkomponente beträgt bevorzugt, bezogen auf das Gesamtgewicht aus der Isocyanat-reaktiven Komponente sowie Additiven mindestens 50 Gew-% und besonders bevorzugt mindestens 65 Gew.-%.

Die zahlengemittelte Molmasse $M_n$ (auch: Molekulargewicht) wird im Rahmen dieser Erfindung bestimmt durch Gelpermeationschromatographie nach DIN 55672-1 vom August 2007.

Die "Hydroxylzahl" gibt die Menge an Kaliumhydroxid in Milligramm an, welche der bei einer Acetylierung von einem Gramm Substanz gebundenen Menge Essigsäure gleichwertig ist. Sie wird im Rahmen der vorliegenden Erfindung bestimmt nach der Norm DIN 53240-2 (1998).

Die "Säurezahl" wird im Rahmen der vorliegenden Erfindung bestimmt nach der Norm DIN EN ISO 2114:2002-06.

"Funktionalität" bezeichnet im Rahmen der vorliegenden Erfindung die theoretische, aus den bekannten Einsatzstoffen und deren Mengenverhältnissen berechnete mittlere Funktionalität (Anzahl an gegenüber Isocyanaten bzw. gegenüber Polyolen reaktiven Funktionen im Molekül).

Im Sinne dieser Anmeldung kann es sich bei "einem Polyetherpolyol" auch um eine Mischung unterschiedlicher Polyetherpolyole handeln, wobei in diesem Fall die Mischung der Polyetherpolyole als gesamtes die genannte OH-Zahl aufweist. Analog gilt dies für die weiteren hier aufgeführten Polyole und ihre Kennzahlen.

Neben den oben beschriebenen Polyolen der Basis-Polyolkomponente können in der Isocyanat-reaktiven Komponente auch weitere Isocyanat-reaktive Verbindungen zum Einsatz kommen:
Der Zusatz von langkettigen Polyolen, insbesondere Polyetherpolyolen, kann die Verbesserung der Fließfähigkeit des Reaktionsgemisches und die Emulgierfähigkeit der treibmittelhaltigen Formulierung bewirken. Für die Herstellung von Verbundelementen mit dem erfindungsgemäßen Verfahren können diese die kontinuierliche Produktion von Elementen mit flexiblen oder starren Deckschichten ermöglichen.

Diese langkettigen Polyole weisen Funktionalitäten von ≥1,2 bis ≤ 3,5 auf und besitzen eine Hydroxylzahl zwischen 10 und 100 mg KOH/g, bevorzugt zwischen 20 und 50 mg KOH/g. Sie besitzen mehr als 70 mol%, bevorzugt mehr als 80 mol%, insbesondere mehr als 90 mol% primäre OH-Gruppen. Die langkettigen Polyole sind bevorzugt Polyetherpolyole mit Funktionalitäten von ≥1,2 bis ≤ 3,5 und einer Hydroxylzahl zwischen 10 und 100 mg KOH/g..

Der Zusatz von mittelkettigen Polyolen, insbesondere Polyetherpolyolen, und niedermolekularen Isocyanat-reaktiven Verbindungen, kann die Verbesserung der Haftung und Dimensionsstabilität des resultierenden Schaumes bewirken. Für die Herstellung von Verbundelementen mit dem erfindungsgemäßen Verfahren können diese mittelkettigen Polyole die kontinuierliche Produktion von Elementen mit flexiblen oder starren Deckschichten ermöglichen. Die mittelkettigen Polyole, bei denen es sich insbesondere um Polyetherpolyole handelt, weisen Funktionalitäten von ≥2 bis ≤6 auf und besitzen eine Hydroxylzahl zwischen 300 und 700 mg KOH/g.

Bei den erfindungsgemäß als Basis-Polyol eingesetzten Polyethern oder als zusätzlich in der Isocyanat-reaktiven Komponente enthaltenen lang- oder mittelkettigen verwendbaren Polyetherpolyolen handelt es sich um die dem Fachmann bekannten, in der Polyurethansynthese einsetzbaren Polyetherpolyole mit den genannten Merkmalen.

Verwendbare Polyetherpolyole sind beispielsweise Polytetramethylenglykolpolyether, wie sie durch Polymerisation von Tetrahydrofuran mittels kationischer Ringöffnung erhältlich sind.

Ebenfalls geeignete Polyetherpolyole sind Additionsprodukte von Styroloxid, Ethylenoxid, Propylenoxid, Butylenoxid und/oder Epichlorhydrin an di- oder polyfunktionelle Startermoleküle. Insbesondere bevorzugt ist die Addition von Ethylenoxid und Propylenoxid. Geeignete Startermoleküle sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, Bisphenole, insbesondere 4,4'-Methylenbisphenol, 4,4'-(1-Methylethyliden)bisphenol, 1,4-Butandiol, 1,6-Hexandiol sowie niedermolekulare, Hydroxylgruppen aufweisende Ester derartiger Polyole mit Dicarbonsäuren sowie Oligoether derartiger Polyole.

Geeignete Polyesterpolyole sind unter anderem Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykole, weiterhin 1,2-Propandiol, 1,3-Propandiol, 1,3- und 1,4-Butandiol, 1,6-Hexandiol und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Es können zusätzlich auch einwertige Alkanole mit verwendet werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, oder Trimellithsäure eingesetzt werden. Als Säurequelle können auch die entsprechenden Anhydride verwendet werden.

Es können zusätzlich auch Monocarbonsäuren wie Benzoesäure und Alkancarbonsäuren mit verwendet werden.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Zur Herstellung der Polyesterpolyole kommen insbesondere auch biobasierte Ausgangsstoffe und/oder deren Derivate in Frage, wie z. B. Rizinusöl, Polyhydroxyfettsäuren, Ricinolsäure, Hydroxyl-modifizierten Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, hydroxylmodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure. Insbesondere bevorzugt sind Ester der Rizinolsäure mit mehrfunktionellen Alkoholen, z.B. Glycerin. Bevorzugt ist auch die Verwendung von Mischungen solcher biobasierten Säuren mit anderen Carbonsäuren, z.B. Phthalsäuren.

Die Polyesterpolyole der Basis-Polyolkomponente weisen bevorzugt eine Säurezahl 0 - 5 mg KOH/g auf. Dies stellt sicher, dass eine Blockade aminischer Katalysatoren durch Überführung in Ammoniumsalze nur begrenzt erfolgt und die Reaktionskinetik der Schäumreaktion wenig beeinträchtigt wird.

Verwendbare Polycarbonatpolyole sind Hydroxylgruppen aufweisende Polycarbonate, zum Beispiel Polycarbonatdiole. Diese entstehen in der Reaktion von Kohlensäurederivaten, wie Diphenylcarbonat, Dimethylcarbonat oder Phosgen, mit Polyolen, bevorzugt Diolen.

Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenole und lactonmodifizierte Diole der vorstehend genannten Art.

Statt oder zusätzlich zu reinen Polycarbonatdiolen können auch Polyether-Polycarbonatdiole eingesetzt werden, welche beispielsweise durch Copolymerisation von Alkylenoxiden, wie zum Beispiel Propylenoxid, mit $CO_2$ erhältlich sind.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit ≥4 bis ≤ 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Neben organischen Dicarbonsäuren können auch Derivate dieser Säuren, beispielsweise deren Anhydride sowie deren Ester und Halbester mit niedermolekularen, monofunktionellen Alkoholen mit ≥ 1 bis ≤ 4 Kohlenstoffatomen eingesetzt werden. Der anteilige Einsatz der oben genannten biobasierten Ausgangsstoffe, insbesondere von Fettsäuren bzw. Fettsäurederivaten (Ölsäure, Sojaöl etc.) ist ebenfalls möglich und kann Vorteile aufweisen, z.B. im Hinblick auf Lagerstabilität der Polyolformulierung, Dimensionsstabilität, Brandverhalten und Druckfestigkeit der Schäume.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten.

Startermoleküle sind zum Beispiel Diole mit zahlenmittleren Molekulargewichten Mn von vorzugsweise ≥ 18 g/mol bis ≤ 400 g/mol, bevorzugt von ≥ 62 g/mol bis ≤ 200 g/mol wie 1,2-Ethandiol, 1,3-Propandiol, 1,2-Propandiol, 1,4-Butandiol, 1,5-Pentendiol, 1,5-Pentandiol, Neopentylglykol, 1,6- Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol. Auch Startermoleküle mit von OH verschiedenen Funktionalitäten können alleine oder in Mischung eingesetzt werden.

Neben den Diolen können als Startermoleküle für die Herstellung der Polyether auch Verbindungen mit > 2 zerewitinoff-aktiven Wasserstoffen, besonders mit zahlenmittleren Funktionalitäten von > 2 bis ≤ 8, insbesondere von ≥3 bis ≤ 6 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole mit mittleren Molmassen Mn von vorzugsweise ≥ 62 g/mol bis ≤ 400 g/mol, insbesondere von ≥92 g/mol bis ≤200 g/mol.

Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoff-aktiven Wasserstoffen, insbesondere Diolen und Polyolen, erhalten werden, hergestellt werden. Als Derivate dieser Säuren können beispielsweise deren Anhydride eingesetzt werden, wie zum Beispiel Phthalsäureanhydrid.

Herstellungsverfahren der Polyole sind beispielsweise von Ionescu in "Chemistry and Technology of Polyols for Polyurethanes", Rapra Technology Limited, Shawbury 2005, S.55 ff. (Kap. 4: Oligo-Polyols for Elastic Polyurethanes), S. 263 ff. (Kap. 8: Polyester Polyols for Elastic Polyurethanes) und insbesondere auf S.321 ff. (Kap. 13: Polyether Polyols for Rigid Polyurethane Foams) und S.419 ff. (Kap. 16: Polyester Polyols for Rigid Polyurethane Foams) beschrieben worden. Es ist auch möglich, Polyester- und Polyetherpolyole über Glykolyse von geeigneten Polymer-Rezyklaten zu gewinnen. Geeignete Polyether-Polycarbonatpolyole und ihre Herstellung werden beispielsweise in der EP 2910585 A, [0024] - [0041], beschrieben. Beispiele zu Polycarbonatpolyolen und ihre Herstellung finden sich unter anderem in der EP 1359177 A. Die Herstellung geeigneter Polyetheresterpolyole ist unter anderem in der WO 2010/043624 A und in der EP 1 923 417 A beschrieben.

Weiterhin können in der Isocyanat-reaktiven Komponente niedermolekulare Isocyanat-reaktive Verbindungen enthalten sein, insbesondere di- oder trifunktionelle Amine und Alkohole, besonders bevorzugt Diole und/oder Triole mit Molmassen Mn kleiner als 400 g/mol, vorzugsweise von 60 bis 300 g/mol, zum Einsatz kommen, z.B. Triethanolamin, Diethylenglykol, Ethylenglykol, Glycerin. Polyolverbindungen, welche unter die Definition der mittelkettigen Polyolverbindungen fallen, sind von der Gruppe der niedermolekularen Isocyanat-reaktiven Verbindungen ausgenommen. Sofern zur Herstellung der Polyurethan-/Polyisocyanurat-Schäume solche niedermolekularen Isocyanat-reaktiven Verbindungen Anwendung finden, z.B. in der Funktion als Kettenverlängerungsmittel und/oder Vernetzungsmittel, kommen diese zweckmäßigerweise in einer Menge von bis zu 5 Gew.-%, bezogen auf das Gesamtgewicht der Isocyanat-reaktiven Komponente zum Einsatz.

Neben den oben beschriebenen Polyolen und Isocyanat-reaktiven Verbindungen können in der Isocyanat-reaktive Verbindung weitere Isocyanat-reaktive Verbindungen enthalten sein, insbesondere Polyamine, Polyaminoalkohole und Polythiole. Selbstverständlich umfassen die beschriebenen Isocyanat-reaktiven Komponenten auch solche Verbindungen mit gemischten Funktionalitäten.

In einer weiterhin bevorzugten Ausführungsform enthält die Isocyanat-reaktive Komponente mindestens ein Polyesterpolyol mit einer Funktionalität von Funktionalitäten von ≥1,2 bis ≤ 3,5, und einer Hydroxylzahl von Zahl von 100 bis 300 mg KOH/g, sowie einer Säurezahl von 0 bis 5,0 mg KOH/g in einer Menge von 65 - 100 Gew.-% bezogen auf das Gesamtgewicht der Isocyanat-reaktiven Komponente; und ein Polyetherpolyol mit einer Funktionalität von ≥ 1,8 bis ≤ 3,5 und einer Hydroxylzahl von 10 bis 100 mg KOH/g, bevorzugt 20 bis 50 mg KOH/g in einer Menge von 0 bis 15 Gew.-%, bezogen auf das Gesamtgewicht aus der Isocyanat-reaktiven Komponente und den Additiven in der zweiten Reaktionsmischung.

Das Reaktionsgemisch kann Additive, z.B. Hilfs- und Zusatzstoffe und Katalysatoren, enthalten. Diese können ganz oder teilweise der Isocyanat-reaktiven Komponente zugegeben werden oder direkt der Mischung der Komponenten zudosiert werden. Die Hilfs- und Zusatzstoffe umfassen alle Komponenten, die üblicherweise Isocyanat-reaktiven Zusammensetzungen zugesetzt werden. Beispiele sind Emulgatoren, Zellregulantien, Thixotropiermittel, Weichmacher und Farbstoffe.

Bevorzugt umfassen die Hilfs- und Zusatzstoffe Emulgatoren. Als geeignete Emulgatoren, die auch als Schaumstabilisatoren dienen, können beispielsweise alle handelsüblichen durch Polyetherseitenketten modifizierten Siliko/oligomere eingesetzt werden, die auch zur Herstellung von herkömmlichen Polyurethanschäumen eingesetzt werden. Falls Emulgatoren eingesetzt werden, handelt es sich um Mengen von bevorzugt bis zu 8 Gew.-%, besonders bevorzugt von 0,5 bis 7 Gew.-%, jeweils bezogen auf das Gesamtgewicht der Isocyanat-reaktiven Zusammensetzung. Bevorzugte Emulgatoren sind Polyetherpolysiloxancopolymerisate. Solche sind beispielsweise unter der Bezeichnung B84504 und B8443 der Firma Evonik, Niax L-5111 der Firma Momentive Performance Materials, AK8830 der Firma Maystar sowie Struksilon 8031 der Fa. Schill und Seilacher am Markt erhältlich. Auch silikonfreie Stabilisatoren, wie bspw. das Produkt LK 443 von Air Products, können auch eingesetzt werden.

Als Additive können zur Verbesserung der Brandbeständigkeit den Isocyanat-reaktiven Zusammensetzungen zudem Flammschutzmittel zugesetzt werden. Derartige Flammschutzmittel sind dem Fachmann im Prinzip bekannt und beispielsweise in "Kunststoffhandbuch", Band 7 "Polyurethane", Kapitel 6.1 beschrieben. Dies können beispielsweise halogenierte Polyester und Polyole, brom- und chlorhaltige Paraffine oder Phosphorverbindungen, wie zum Beispiel die Ester der Orthophosphorsäure und der Metaphosphorsäure, die ebenfalls Halogen enthalten können, sein. Bevorzugt werden bei Raumtemperatur flüssige Flammschutzmittel gewählt. Beispiele sind Triethylphosphat, Diethylethanphosphonat, Kresyldiphenylphosphat, Dimethylpropanphosphonat und Tris(β-chlorisopropyl)phosphat. Besonders bevorzugt sind Flammschutzmittel ausgewählt aus der Gruppe bestehend aus Tris(chloro-2-propyl)-phosphat (TCPP) und Triethylphosphat (TEP) und Mischungen daraus. Bevorzugt werden Flammschutzmittel in einer Menge von 1 bis 30 Gew.-%, besonders bevorzugt 5 bis 30 Gew.- %, bezogen auf das Gesamtgewicht der Isocyanat-reaktiven Komponente eingesetzt. Um bestimmte Eigenschaftsprofile (Viskosität, Sprödigkeit, Brennbarkeit, Halogengehalt etc.) zu erzielen, kann es auch günstig sein, unterschiedliche Flammschutzmittel miteinander zu kombinieren.

Die Reaktivität der zweiten Reaktionsmischung wird i.d.R. mittels den bereits oben erwähnten Katalysatoren (in dieser Definition umfasst sind jegliche die Reaktivität erhöhende Komponenten, z.B. auch Aminopolyether), auf die Bedürfnisse angepasst. Katalysatoren sind Verbindungen, die geeignet sind, die Treibreaktion, die Urethanreaktion und / oder die Isocyanuratreaktion (Trimerisierung) zu katalysieren. Die Katalysatorkomponenten können dem Reaktionsgemisch zudosiert oder auch ganz oder teilweise in der Isocyanat-reaktiven Komponente vorgelegt werden und in der Art und Menge der gewünschten Anwendung anzupassen. So verlangt die Herstellung von dünnen Platten ein Reaktionsgemisch mit einer höheren Reaktivität als die Herstellung von dickeren Platten.

Hierfür geeignet sind insbesondere eine oder mehrere katalytisch aktive Verbindungen ausgewählt aus den folgenden Gruppen:

D1) Aminische Katalysatoren z.B. Amidine, wie 2,3-Dimethyl-3,4,5,6-tetrahydropyrimidin, tertiäre Amine, wie Triethylamin, Tributylamin, Dimethylcyclohexylamin, Dimethylbenzylamin, N-Methyl-, N-Ethyl-, N-Cyclohexylmorpholin, N,N,N',N'- Tetramethylethylendiamin, N,N,N',N'-Tetramethylbutandiamin, N,N,N',N'-Tetramethylhexandiamin-1,6, Pentamethyldiethylentriamin, Bis(2-dimethylaminoethyl)ether, Bis-(dimethylaminopropyl)-harnstoff, Dimethylpiperazin, 1,2-Dimethyl-imidazol, N,N',N''-Tris-(dimethylaminopropyl)hexahydrotriazin, Bis[2-(N,N-dimethylamino)ethyl]ether, 1-Aza-bicyclo-(3,3,0)-octan und 1,4-Diaza-bi-cyclo-(2,2,2)-octan, und Alkanolaminverbindungen, wie Triethanolamin, Triisopropanolamin, N-Methyl- und N-Ethyl-diethanolamin, N,N-Dimethylaminoethoxyethanol, N,N,N'-Trimethylaminoethyl-ethanolamin und Dimethylethanolamin. Besonders geeignete Verbindungen sind ausgewählt aus der Gruppe umfassend tertiäre Amine, wie Triethylamin, Tributylamin, Dimethylcyclohexylamin, Dimethylbenzylamin, N,N,N',N'- Tetramethylethylendiamin, Pentamethyldiethylentriamin, Bis(2-dimethylaminoethyl)ether, Dimethylpiperazin, 1,2-Dimethyl-imidazol und Alkanolaminverbindungen, wie Tris(dimethylaminomethyl)phenol, Triethanolamin, Triisopropanolamin, N-Methyl- und N-Ethyl-diethanolamin, N,N-Dimethylaminoethoxyethanol, N,N,N'-Trimethylaminoethyl-ethanolamin und Dimethylethanolamin,

In einer besonders bevorzugten Ausführungsform werden in der Katalysatorkomponente ein oder mehrere aminische Verbindungen gemäß folgender Struktur eingesetzt:

$$(CH_3)_2N-CH_2-CH_2-X-CH_2-CH_2-Y$$

wobei Y = $NR_2$ oder OH, vorzugsweise Y = $N(CH_3)_2$ oder OH, besonders bevorzugt Y = $N(CH_3)_2$ und wobei X= NR oder O, vorzugsweise X= N-$CH_3$ oder O, besonders bevorzugt X= N-$CH_3$. Dabei ist jedes R unabhängig von jedem anderen R wählbar und stellt einen beliebig aufgebauten organischen Rest mit mindestens einem C-Atom dar. Vorzugsweise ist R eine Alkylgruppe mit 1 bis 12 C-Atomen, insbesondere C1- bis C6-Alkyl, besonders bevorzugt Methyl und Ethyl, insbesondere Methyl.

D2) Carboxylate von Alkali- oder Erdalkalimetallen, insbesondere Na¬itrium¬acetat, Natriumoctoat, Kaliumacetat, Kaliumoctoat, sowie Zinncarboxylate, z.B.. Zinn-(II)-acetat, Zinn-(II)-octoat, Zinn-(II)-ethylhexoat, Zinn-(II)-laurat, Dibutyl¬zinndiacetat, Di¬butyl¬zinndilaurat, Dibutylzinnmaleat und Dioctyl¬zinndiacetat. und Ammoniumcarboxylate. Insbesondere bevorzugt sind Natrium-, Kalium- und Ammoniumcarboxylate. Bevorzugte Carboxylate sind Formiate, Ethylhexanoate (=Octoate), Proprionate und Acetate.

Bevorzugt enthält der Katalysator einen oder mehrere Katalysatoren ausgewählt aus der Gruppe bestehend aus Kaliumacetat, Kaliumoctoat, Pentamethyldiethylentriamin, N,N',N''-Tris-(dimethylaminopropyl)hexahydrotriazin, Tris(dimethylaminomethyl)phenol, Bis[2-(N,N-dimethylamino)ethyl] ether, Dimethylbenzylamin und N,N-Dimethylcyclohexylamin, besonders bevorzugt aus Pentamethyldiethylentriamin, N,N',N''-Tris-(dimethylaminopropyl)hexahydrotriazin und N,N-Dimethylcyclohexylamin, besonders bevorzugt aus Penta¬methyl¬diethylentriamin, N,N',N''-Tris-(dimethylaminopropyl)hexahydrotriazin und N,N-Dimethylcyclohexylamin in Kombination mit Kaliumacetat, Kaliumoctoat oder Kaliumformiat oder Natriumformiat

Bevorzugt wird eine Kombination aus Katalysatorkomponenten D1 und D2 in dem Reaktionsgemisch verwendet. In diesem Fall sollte das molare Verhältnis so gewählt sein, dass das Verhältnis von D2/D1 zwischen 0,1 und 80 liegt, insbesondere zwischen 2 und 20. Kurze Abbindezeiten können zum Beispiel mit mehr als 0,9 Gew.-% Kalium-2-ethylhexanoat bezogen auf alle Komponenten des Reaktionsgemisches erzielt werden.

Bei dem Polyisocyanat handelt es sich um ein Isocyanat mit einer NCO-Funktionalität von ≥ 2. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe,, 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit CI bis C6-Alkylgruppen.

Als Polyisocyanat werden bevorzugt Mischungen der Isomeren des Diphenylmethandiisocyanats ("monomeres MDI", abgekürzt "mMDI") und dessen Oligomeren ("oligomeres MDI") eingesetzt. Mischungen aus monomerem MDI und oligomerem MDI werden allgemein als "polymeres MDI" (pMDI) bezeichnet. Die Oligomere des MDI sind höherkernige Polyphenyl-polymethylenpolyisocyanate, d.h. Gemische der höherkernigen Homologen des Diphenyl-methylendiisocyanates, welche eine NCO - Funktionalität f > 2 aufweisen und sich durch folgende Summenformel beschreiben lassen: $C_{15}H_{10}N_2O_2[C_8H_5NO]_n$, wobei n = ganze Zahl > 0, bevorzugt n = 1, 2, 3 und 4, ist. Höherkernige Homologe $C_{15}H_{10}N_2O_2[C_8H_5NO]_m$, m = ganze Zahl ≥ 4) können ebenfalls im Gemisch aus organischen Polyisocyanaten enthalten sein. Als Polyisocyanatkomponente weiterhin bevorzugt sind Mischungen aus mMDI und/oder pMDI mit maximal bis zu 20 Gew.-%, mehr bevorzugt maximal 10 Gew.-% an weiteren, für die Herstellung von Polyurethanen bekannten aliphatischen, cycloaliphatischen und insbesondere aromatischen Polyisocyanaten, ganz besonders TDI.

Das Polyisocyanat zeichnet sich weiterhin dadurch aus, dass es vorzugsweise eine Funktionalität von mindestens 2, insbesondere mindestens 2,2, besonders bevorzugt mindestens 2,4, und ganz besonders bevorzugt mindestens 2,7 aufweist.

Der NCO-Gehalt im Polyisocyanat beträgt bevorzugt von $\geq$ 29,0 Gew.-% bis $\leq$ 33,0 Gew.%, und weist bevorzugt eine Viskosität bei 25 °C von $\geq$ 80 mPas bis $\leq$ 2900 mPas, besonders bevorzugt von $\geq$ 95 mPas bis $\leq$ 850 mPas bei 25 °C.

Der NCO-Wert (auch: NCO-Gehalt, Isocyanatgehalt) wird bestimmt mittels EN ISO 11909:2007. Falls nicht anders angegeben, handelt es sich um die Werte bei 25°C.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4''-triisocyanat mit eingesetzt werden.

Statt oder zusätzlich zu den oben genannten Polyisocyanaten können auch geeignete NCO-Präpolymere als organisches Polyisocyanat eingesetzt werden. Die Präpolymere sind herstellbar durch Umsetzung eines oder mehrerer Polyisocyanate mit einem oder mehreren Polyolen, entsprechend den oben beschriebenen Polyolen. Es ist möglich, dass das Isocyanat ein Präpolymer ist, welches erhältlich ist durch Reaktion eines Isocyanats mit einer NCO-Funktionalität von $\geq$ 2 und Polyolen mit einem Molmasse $M_n$ von $\geq$ 62 g/mol bis $\leq$ 8000 g/mol und OH-Funktionalitäten von $\geq$ 1,5 bis $\leq$ 6.

Aus Isocyanat-reaktiver Komponente und Polyisocyanat wird durch Mischung ein Reaktionsgemisch erzeugt, welches zu Polyurethan/Polyisocyanurat- Schäumen reagieren kann. Dieses Reaktionsgemisch kann direkt in einem Mischkopf erzeugt werden.

Unter der Isocyanat-Kennzahl (auch Kennzahl oder Isocyanat-Index genannt) wird der Quotient aus der tatsächlich eingesetzten Stoffmenge [Mol] an Isocyanat-Gruppen und der tatsächlich eingesetzten Stoffmenge [Mol] an Isocyanat-reaktiven Gruppen, multipliziert mit 100, verstanden:

$$\text{Kennzahl} = (\text{Mole Isocyanat-Gruppen} / \text{Mole Isocyanat-reaktive Gruppen}) * 100$$

Es ist möglich, dass im Reaktionsgemisch die Anzahl der NCO-Gruppen im Isocyanat und die Anzahl der gegenüber Isocyanaten reaktiven Gruppen zu einer Kennzahl (Index) von 90 bis 600 führen, bevorzugt zwischen 115 und 400. Die Kennzahl liegt bevorzugt in einem Bereich von > 180 bis < 450 (in diesem Bereich liegt ein hoher Anteil an Polyisocyanuraten (PIR) vor und der (Hart)schaum wird als PIR-Schaum oder PUR/PIR-Schaum bezeichnet). Ein anderer bevorzugter Bereich für die Isocyanat-Kennzahl ist der Wertebereich von > 90 bis < 140 (in diesem Bereich wird der (Hart)schaum als Polyurethanschaum (PUR-Schaum) bezeichnet).

Die zweite Reaktionsmischung enthält weiterhin so viel Treibmittel, wie zur Erzielung einer dimensionsstabilen Schaummatrix und der gewünschten Rohdichte nötig ist. In der Regel sind dies 0,5 - 30 Gewichtsteile Treibmittel bezogen auf 100 Gewichtsteile der Komponente A. Als Treibmittel werden vorzugsweise physikalische Treibmittel ausgewählt aus wenigstens einem Mitglied der Gruppe bestehend aus Kohlenwasserstoffen, halogenierten Ethern und perfluorierten und teilfluorierten Kohlenwasserstoffen mit 1 bis 8 Kohlenstoffatomen eingesetzt. Unter "physikalischen Treibmitteln" werden im Rahmen der vorliegenden Erfindung solche Verbindungen verstanden, die aufgrund ihrer physikalischen Eigenschaften leicht flüchtig sind und nicht mit der Isocyanatkomponente reagieren. Bevorzugt sind die erfindungsgemäß einzusetzenden physikalischen Treibmittel ausgewählt aus Kohlenwasserstoffen (z. B. n-Pentan, iso-Pentan, cycloPentan, Butan, Isobutan, Propan), Ethern (z. B. Methylal), halogenierten Ethern, (per)fluorierte Kohlenwasserstoffe mit 1 bis 8 Kohlenstoffatomen (z. B. Perfluorhexan), sowie deren Gemischen untereinander. Auch bevorzugt ist der Einsatz von (hydro)fluorierten Olefinen, wie z.B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4-(trifluormethyl)pent-2-en), sowie der Einsatz von Kombinationen dieser Treibmittel. In besonders bevorzugten Ausführungsformen wird als Treibmittel ein Pentanisomer oder ein Gemisch verschiedener Pentanisomeren eingesetzt. Außerordentlich besonders bevorzugt wird eine Mischung aus Cyclopentan und Isopentan als Treibmittel eingesetzt. Weitere Beispiele für bevorzugt eingesetzte Fluorkohlenwasserstoffe sind z.B. HFC 245fa (1,1,1,3,3-Pentafluorpropan), HFC 365mfc (1,1,1,3,3-Pentafluorbutan), HFC 134a oder deren Mischungen verwendet. Es können auch verschiedene Treibmittelklassen kombiniert werden.

Insbesondere bevorzugt ist auch der Einsatz von (hydro)fluorierten Olefinen, wie z.B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4oder2)-(trifluormethyl)pent-2-en und/oder 1,1,1,3,4,4,5,5,5- Nonafluor-4(oder2)-(trifluormethyl)pent-2-en), allein oder in Kombination mit anderen Treibmitteln. Diese haben den Vorteil, ein besonders niedriges Ozonabbaupotential (ODP) aufzuweisen und ein besonders niedriges Treibhauspotential (GWP) zu besitzen.

Zusätzlich oder auch statt der oben aufgeführten physikalischen Treibmittel können auch chemische Treibmittel (auch "Co- Treibmittel") verwendet werden. Bei diesen handelt es sich besonders bevorzugt um Wasser und / oder Ameisensäure. Vorzugsweise werden die chemischen Treibmittel zusammen mit physikalischen Treibmitteln verwendet. Bevorzugt werden die Co-Treibmittel in einer Menge bis 6 Gew.-%, besonders bevorzugt 0,5 bis 4 Gew.-% für die Verbundelemente, bezogen auf die Gesamtmenge an Verbindungen mit gegenüber Isocyanatgruppen reaktiven Wasserstoffatomen in der zweiten Reaktionsmischung.

Bevorzugt wird für Verbundelemente eine Mischung aus 0 und 6,0 Gew.-% an Co-Treibmittel und 1,0 bis 30,0 Gew.-% an Treibmittel, jeweils bezogen auf 100 Gew.-% der Gesamtmenge an Isocyanat-reaktiver Komponente und den Additiven, eingesetzt. Das Mengenverhältnis von Co-Treibmittel zu Treibmittel kann aber auch je nach Bedarf von 1:7 bis 1:35 betragen.

Die im erfindungsgemäßen Verfahren eingesetzte Haftvermittlerkomponente kann als Ein-Komponenten-Haftvermittler (1K) oder als Mehrkomponenten-Haftvermittler ausgestaltet sein. Beispielsweise kann die Haftvermittlerkomponente zwei, drei, vier oder noch mehr einzelne Komponenten umfassen, welche zusammen zu dem Haftvermittler reagieren. Hinsichtlich geeigneter Polyisocyanate, Polyole, etc. sind prinzipiell die zuvor zur zweiten Reaktionsmischung genannten Verbindungen ebenfalls geeignet, wobei die Rezeptur des Haftvermittlers vorzugsweise auf eine Verbesserung der Haftungseigenschaften des PUR/PIR-Schaums auf der Deckschicht optimiert ist.

Es ist erfindungsgemäß weiterhin vorgesehen, dass die Haftvermittlerkomponente in einem vorbestimmten Muster auf die erste Deckschicht aufgetragen wird. Hierdurch unterscheidet sich das erfindungsgemäße Verfahren nicht nur vom Auftragen des 2K-Haftvermittler-Reaktionsgemisches mittels eines Drehtellers auf die erste Deckschicht, sondern auch vom Aufsprühen der 2K-Mischung oder der einzelnen Komponenten auf die erste Deckschicht, welche alle eine zufällige und keine gesteuerte Verteilung des Haftvermittlers auf der ersten Deckschicht bewirken.

Wenn die Haftvermittlerkomponente oder einzelne Komponenten hiervon aus einer Düse ausgestoßen werden, weisen sie beispielsweise eine Viskosität (ISO 3219:1993; deutsche Version EN ISO 3219:1994 bei 20 °C) von $\leq$ 2 Pas, bevorzugt $\leq$ 1 Pas und mehr bevorzugt $\leq$ 200 mPas auf.

Das vorbestimmte Muster liegt vorzugsweise schon, aufgrund der Realisierung des Musters durch Tropfen beispielsweise einer ersten und zweiten Komponente der ersten Reaktionsmischung, in der Steuereinheit als gerastertes Muster vor. Es ist aber auch möglich, mittels eines Raster Image Processors (RIP) aus beliebigen Quellen in der Steuerungseinheit das gerasterte Muster zu erzeugen. In der Terminologie der Drucktechnik lässt sich das gerasterte Muster beispielsweise als Mehrfarbenbild - die Grundfarben sind die Komponenten der ersten Reaktionsmischung - betrachten, wobei die "Farbe" das stöchiometrische Verhältnis der beiden Komponenten darstellt und überall gleich sein kann oder in beabsichtigter Weise auch unterschiedlich sein kann. In letzterem Fall kann der RIP auch eine Farbseparation vornehmen, wodurch das vorbestimmte Muster in zwei oder mehr Teilmustern vorliegt.

Im erfindungsgemäßen Verfahren wird unterschieden, ob es sich um einen 1K-Haftvermittler oder um einen Mehrkomponenten-Haftvermittler handelt. Im Fall des 1K-Haftvermittlers wird dieser tropfenweise auf Anweisung einer Steuerungseinheit aufgetragen. Es kommen sowohl Hotmelt-Klebstoffe als auch feuchtigkeitshärtende, thermisch härtende oder UV-härtende 1K-Polyurethansysteme in Betracht.

Im Fall von Mehrkomponenten-Haftvermittlern umfasst das Auftragen der ersten Reaktionsmischung (diejenige, welche zu dem Haftvermittler reagiert), in Schritt 2) mehrere Teilschritte. In Schritt 2a) wird ein Tropfen einer ersten Komponente auf die erste Deckschicht aufgetragen. Diese erste Komponente ist aus denjenigen Komponenten ausgewählt, welche zusammen die erste Reaktionsmischung ergeben. Das Auftragen erfolgt gemäß dem vorbestimmten Muster.

In Schritt 2b) erfolgt das Auftragen eines Tropfens einer weiteren Komponente, welche aus denjenigen Komponenten ausgewählt ist, welche zusammen die erste Reaktionsmischung ergeben. Es ergibt sich von selbst, dass diese Komponente von der ersten Komponente verschieden ist.

Diese Kontaktierung der Tropfen erfolgt in Schritt 2b). Vorzugsweise kontaktiert der Tropfen der späteren Komponente den zuvor aufgetragenen Tropfen der ersten Komponente vollständig, so dass eine möglichst effiziente Vermischung der Komponenten erfolgen kann. Die möglichst effiziente Vermischung lässt sich auch über die Wahl der Tropfengrößen für die Komponenten steuern, welche im Rahmen der durch die gewählte Reaktionsstöchiometrie dennoch möglichst wenig voneinander abweichen sollten.

Schritt 2c) schließlich sieht die Wiederholung der Schritte 2a) und 2b) vor, bis das vorbestimmte Muster der Tropfen aufgetragen ist. In den einzelnen Schritten 2a) des Verfahrens können die aufgetragenen Tropfen isoliert voneinander auf die erste Deckschicht aufgetragen werden oder so nah nebeneinander, dass sie eine kontinuierliche Struktur bilden. Das Gleiche gilt für die in Schritt 2b) aufgetragenen Tropfen. Es ist einerseits möglich, dass auf dem Substrat zunächst alle Tropfen der ersten Komponente aufgetragen werden und dann alle Tropfen der weiteren Komponenten. Andererseits ist es auch möglich, dass die Schritte 2a) und 2b) im Wechsel durchgeführt werden. Mischformen dieser beiden Vorgehensweisen sind ebenfalls denkbar.

Schritt 2b) wird selbstverständlich für jede von der ersten Komponente verschiedene Komponente der ersten Reaktionsmischung durchgeführt.

Das Auftragen der Tropfen in Schritt 2a) und/oder 2b), wobei die Alternative bevorzugt ist, welche Schritt 2a) und 2b) vorsieht, erfolgt auf Anweisung der Steuereinheit derart, dass ein einzelner Tropfen aus einer Düse ausgestoßen wird. Der Auftrag der Tropfen ist somit diskretisiert, wodurch sich das erfindungsgemäße Verfahren ebenfalls von einem nicht diskretisierten Sprühauftrag unterscheidet. Insofern lässt sich Schritt 2) des Verfahrens konzeptionell mit einem Tintenstrahldruckverfahren vergleichen und, angelehnt an die Begriffe der additiven Fertigung/3D-Druck, als 2D-Druck bezeichnen. Die Frequenz, mit der die Düse einzelne Tropfen ausstößt, kann im Bereich von $\geq$ 10 Hz bis $\leq$ 10000 Hz, vorzugsweise $\geq$ 500 Hz bis $\leq$ 1500 Hz liegen.

In Schritt 2a) und/oder Schritt 2b) können die Tropfen beispielsweise ein Volumen von > 0,1 nL bis $\leq$ 1000 nL aufweisen. Vorzugsweise weisen in Schritt 2a) und Schritt 2b) die Tropfen ein Volumen von $\geq$ 10 nL bis $\leq$ 500 nL auf, mehr bevorzugt $\geq$ 15 nL bis $\leq$ 440 nL.

Weiterhin können in Schritt 2a) und/oder 2b) die Tropfen beispielsweise mit einer Auflösung von $\geq$ 5 dpi (dots per inches, Bildpunkte pro 2.54 cm) bis $\leq$ 100 dpi aufgetragen werden. Vorzugsweise werden in Schritt 2a) und 2b) die Tropfen mit einer Auflösung von $\geq$ 10 dpi bis $\leq$ 100 dpi aufgetragen, mehr bevorzugt $\geq$ 20 dpi bis $\leq$ 80 dpi, besonders bevorzugt $\geq$ 30 dpi bis $\leq$ 60 dpi.

Die Düse oder Düsen, aus denen die Tropfen ausgestoßen werden, können durch ein Inertgas gegenüber der Luftfeuchtigkeit abgeschottet werden.

In einer Ausführungsform des erfindungsgemäßen Verfahrens wird die erste Reaktionsmischung aus einer Isocyanat-Komponente und einer gegenüber Isocyanaten reaktiven Komponente erhalten und das Auftragen der ersten Reaktionsmischung auf die erste Deckschicht in Schritt 2) umfasst die Schritte:

2a) Auftragen eines Tropfens einer ersten Komponente ausgewählt aus Isocyanat-Komponente und gegenüber Isocyanaten reaktiven Komponente, entsprechend dem vorbestimmten Muster, auf die erste Deckschicht;

2b) Auftragen eines Tropfens einer zweiten Komponente, welche die andere Komponente ausgewählt aus Isocyanat-Komponente und gegenüber Isocyanaten reaktiven Komponente darstellt, entsprechend dem vorbestimmten Muster, auf einen zuvor aufgetragenen Tropfen der ersten Komponente, so dass der zuvor aufgetragene Tropfen der ersten Komponente zumindest teilweise von dem Tropfen der zweiten Komponente kontaktiert wird;

2c) Wiederholen der Schritte 2a) und 2b), bis das vorbestimmte Muster der Tropfen aufgetragen ist;

wobei in Schritt 2a) und/oder Schritt 2b) das Auftragen des Tropfens derart erfolgt, dass auf Anweisung einer Steuereinheit ein einzelner Tropfen aus einer Düse ausgestoßen wird.

Die erste Reaktionsmischung wird hier aus einer Isocyanat-Komponente und einer gegenüber Isocyanaten reaktiven Komponente erhalten. Insofern handelt es sich um ein 2-Komponenten-(2K-) System. Hinsichtlich geeigneter Polyisocyanate, Polyole, etc. sind prinzipiell die zuvor zur zweiten Reaktionsmischung genannten Verbindungen ebenfalls geeignet, wobei die Rezeptur des Haftvermittlers vorzugsweise auf eine Verbesserung der Haftungseigenschaften des PUR/PIR-Schaums auf der Deckschicht optimiert ist.

In Schritt 2a) wird ein Tropfen einer ersten Komponente auf die erste Deckschicht aufgetragen. Diese erste Komponente ist entweder die Isocyanat-Komponente oder die gegenüber Isocyanaten reaktive Komponente. In Schritt 2b) erfolgt das Auftragen eines Tropfens einer zweiten Komponente, welche die zur ersten Komponente komplementäre Komponente darstellt. Ist die erste Komponente die Isocyanat-Komponente, so ist die zweite Komponente die gegenüber Isocyanaten reaktive Komponente. Im umgekehrten Fall, wenn die erste Komponente die gegenüber Isocyanaten reaktive Komponente ist, ist die zweite Komponente die Isocyanat-Komponente.

In Schritt 2a) wird der Tropfen der ersten Komponente entsprechend dem vorbestimmten Muster auf die erste Deckschicht aufgetragen. Um die zu einem Haftvermittler reagierende erste Reaktionsmischung zu erhalten, wird dieser Tropfen, beziehungsweise das auf der Deckschicht vorliegende Material der ersten Komponente, welches in Form des Tropfens auf die Deckschicht aufgetragen wurde, mit der zweiten Komponente kontaktiert.

Diese Kontaktierung erfolgt in Schritt 2b). Vorzugsweise kontaktiert der Tropfen der zweiten Komponente den zuvor aufgetragenen Tropfen der ersten Komponente vollständig, so dass eine möglichst effiziente Vermischung der Komponenten erfolgen kann. Die möglichst effiziente Vermischung lässt sich auch über die Wahl der Tropfengrößen für die erste und zweite Komponente steuern, welche im Rahmen der durch die gewählte Reaktionsstöchiometrie dennoch möglichst wenig voneinander abweichen sollten.

Schritt 2c) schließlich sieht die Wiederholung der Schritte 2a) und 2b) vor, bis das vorbestimmte Muster der Tropfen aufgetragen ist. In den einzelnen Schritten 2a) des Verfahrens können die aufgetragenen Tropfen isoliert voneinander auf die Deckschicht aufgetragen werden oder so nah nebeneinander, dass sie eine kontinuierliche Struktur bilden. Das Gleiche gilt für die in Schritt 2b) aufgetragenen Tropfen. Es ist einerseits möglich, dass auf dem Substrat zunächst alle Tropfen der ersten Komponente aufgetragen werden und dann alle Tropfen der zweiten Komponente. Andererseits ist es auch möglich, dass die Schritte 2a) und 2b) im Wechsel durchgeführt werden. Mischformen dieser beiden Vorgehensweisen sind ebenfalls denkbar.

Das Auftragen des Tropfens in Schritt 2a) und/oder 2b), wobei die Alternative bevorzugt ist, welche Schritt 2a) und 2b) vorsieht, erfolgt auf Anweisung der Steuereinheit derart, dass ein einzelner Tropfen aus einer Düse ausgestoßen wird.

In einer weiteren Ausführungsform des erfindungsgemäßen Verfahrens wird die Haftvermittlerkomponente mit einer Flächendichte von $\geq$ 10 g/m$^2$ bis 200 g/m$^2$ (vorzugsweise $\geq$ 50 g/m$^2$ bis 100 g/m$^2$) auf die erste Deckschicht aufgetragen.

In einer weiteren Ausführungsform des erfindungsgemäßen Verfahrens wird die Haftvermittlerkomponente mit einem Bedeckungsgrad von $\geq$ 10% bis $\leq$ 90% (vorzugsweise $\geq$ 20% bis $\leq$ 70%) auf die erste Deckschicht aufgetragen. Der Bedeckungsgrad ist hierbei als der Anteil der Oberfläche der ersten Deckschicht zu verstehen, welche von der Haftvermittlerkomponente bedeckt wird.

In einer weiteren Ausführungsform des erfindungsgemäßen Verfahrens verändern sich das Volumenverhältnis und/oder die Frequenz der in Schritt 2a) und 2b) aufgetragenen Tropfen zeitlich. Über unterschiedliche Volumenverhältnisse der Komponenten des 2K-Haftvermittlers lässt sich das molare Verhältnis von NCO-Gruppen zu Zerewitinoff-aktiven H-Atomen (Index) in der ersten Reaktionsmischung steuern. Dann kann durch eine zeitliche Änderung der Volumenverhältnisse im Verlauf des erfindungsgemäßen Verfahrens der Index auch verändert werden. Auf diese Weise kann räumlich unterschiedlichen Anforderungen für die Beschaffenheit des Haftvermittlers Rechnung getragen werden, wenn zum Beispiel am Rand der Deckschicht ein etwas härterer Haftvermittler und in der Mitte der Deckschicht ein etwas weicherer Haftvermittler erwünscht sind.

In einer weiteren Ausführungsform des erfindungsgemäßen Verfahrens weist die erste Reaktionsmischung eine Isocyanatkomponente, eine erste gegenüber Isocyanaten reaktive Komponente und eine zweite gegenüber Isocyanaten reaktive Komponente auf und die erste gegenüber Isocyanaten reaktive Komponente und die zweite gegenüber Isocyanaten reaktive Komponente weisen jeweils für sich betrachtet eine unterschiedliche Reaktionsgeschwindigkeit mit der Isocyanat-Komponente auf. Unterschiedliche Reaktionsgeschwindigkeiten lassen sich beispielsweise über unterschiedlich reaktive Polyole oder über einen unterschiedlichen Katalysator oder Katalysatoranteil erreichen. Dann kann auch das Reaktionsprofil (Geschwindigkeit der zum Haftvermittler führenden Reaktion) zeitlich und örtlich gesteuert werden. Das kann z.B. Anwendung finden, wenn die Bandgeschwindigkeit geändert werden soll und der Haftvermittler trotzdem mit dem optimalen Reaktionsumsatz an der Stelle des Schaumeintrages ankommen soll.

In einer weiteren Ausführungsform des erfindungsgemäßen Verfahrens ist das vorbestimmte Muster, in dem die erste Reaktionsmischung auf die Deckschicht aufgetragen wird, ausgewählt aus Linien, Wellen, Punkten oder eine Kombination hiervon. Das Muster kann auch lokal oder zeitlich variieren.

In einer weiteren Ausführungsform des erfindungsgemäßen Verfahrens ist in Schritt 2a) und/oder 2b) eine Mehrzahl von Düsen in einem Druckkopf angeordnet. Dieser Druckkopf kann dann beispielsweise an einem Roboterarm oder beweglich an einer Traverse über der Deckschicht platziert werden.

In einer weiteren Ausführungsform des erfindungsgemäßen Verfahrens erstreckt sich der Druckkopf über die gesamte Breite des Auftragsbereiches. Er ist somit fest installiert und muss nicht mehr bewegt werden.

In einer weiteren Ausführungsform des erfindungsgemäßen Verfahrens ist in Schritt 2a) und/oder 2b) die Düse, aus der der Tropfen ausgestoßen wird, als durch ein durch die Steuereinheit ansteuerbares Nadelventil ausgestaltet. Durch geeignete elektromechanische oder piezoelektrische Aktoren kann das Nadelventil zurückgezogen werden und so den Austritt des Tropfens aus der Düse ermöglichen. Der Vorteil einer solchen Düsenkonstruktion ist ihre leichte Reinigung. Die Düse kann durch die auszustoßende Komponente druckbeaufschlagt sein, beispielsweise mit einem Druck von 1 bar bis zu 300 bar.

In einer weiteren Ausführungsform des erfindungsgemäßen Verfahrens bewegt sich die erste Deckschicht wenigstens während des Schritts 2). Das erfindungsgemäße Verfahren ist vorzugsweise ein kontinuierliches Verfahren. Es eignet sich zur Herstellung von Schaum-Verbundelementen wie Metall-Verbundelementen in schnell laufender Produktionsweise. Die Deckschichtgeschwindigkeit beträgt dickenabhängig beispielsweise bis 20 Meter pro Minute, vorzugsweise bis 15 Meter pro Minute, mehr bevorzugt bis 10 Meter pro Minute.

In einer weiteren Ausführungsform des erfindungsgemäßen Verfahrens wird die erste Deckschicht wenigstens während des Schritts 2) in Vibration versetzt. Dieses kann beispielsweise durch unterhalb der Deckschicht angebrachte Rollen oder Stützen erfolgen. Durch eine Vibration der Deckschicht lässt sich eine schnellere und gründlichere Vermischung der beiden Komponenten des 2K-Haftvermittlers erreichen.

In einer weiteren Ausführungsform des erfindungsgemäßen Verfahrens weist die erste Deckschicht gegenüber Tropfen der ersten oder zweiten Komponente eine elektrostatische Potentialdifferenz auf. Hierdurch kann ebenfalls das Vermischungsverhalten der beiden Komponenten des 2K-Haftvermittlers beeinflusst werden.

Eine weitere Ausführungsform des erfindungsgemäßen Verfahrens ist, dass in der ersten Reaktionsmischung die erste Komponente eine höhere Viskosität aufweist als die zweite Komponente. Die Viskosität der Isocyanat-Komponente und der gegenüber Isocyanaten reaktiven Komponente werden vorzugsweise gemäß DIN EN ISO 11909/ISO 3219 bei 20 °C bestimmt. Das Auftragen der viskoseren Komponente vor der niedriger viskosen Komponente hat Vorteile für die Bildung der Reaktionsmischung. Beim Kontaktieren der Tropfen wird die untenliegende, viskosere Komponente nicht so leicht von der auf sie auftreffenden Komponente verdrängt.

In einer weiteren Ausführungsform des erfindungsgemäßen Verfahrens umfasst in der ersten Reaktionsmischung die gegenüber Isocyanaten reaktive Komponente weiterhin ein Treibmittel. Geeignet sind sowohl physikalische als auch chemische Treibmittel. Die Gasblasenbildung durch das Treibmittel unterstützt die Vermischung der beiden Reaktionskomponenten auf dem Substrat.

In einer weiteren Ausführungsform des erfindungsgemäßen Verfahrens umfasst in der ersten Reaktionsmischung die Isocyanat-Komponente monomeres und/oder polymeres 4,4'-MDI und die gegenüber Isocyanaten reaktive Komponente ein Propylenglycol-Propylenoxid-Polyetherpolyol und/oder ein auf Toluylendiamin gestartetes Ethylenoxid-Propylenoxid-Polyetherpolyol.

Ein Beispiel für eine Rezeptur für die erste Reaktionsmischung ist eine Isocyanat-Komponente aus polymerem MDI von niedriger Viskosität, Desmodur 44V10 L (Covestro AG). Als gegenüber Isocyanaten reaktive Komponente kann die folgende Formulierung eingesetzt werden:

| | |
|---|---|
| 59,6 Gew.% | Propylenglycol-Propylenoxid-Polyether, Molmasse 1000 g/mol |
| 40,0 Gew.% | o-Toluylendiamin-Ethylenoxid-Propylenoxid-Polyether, Molmasse 540 g/mol. |
| 0,2 Gew.% | 1-Methylimidazol |
| 0,2 Gew.% | Tegostab B 8443, Fa. Goldschmidt |

In einer weiteren Ausführungsform des erfindungsgemäßen Verfahrens wird nach Schritt 3) der Schritt 4) durchgeführt:

4) Kontaktieren der zu einem Polyurethan-/Polyisocyanurat-Schaum reagierenden zweiten Reaktionsmischung mit einer zweiten Deckschicht.

Vorzugsweise wird in Schritt 4) die zweite Deckschicht auf der der zweiten Reaktionsmischung zugewandten Seite mit einem Haftvermittler und/oder einer zu einem Haftvermittler reagierenden Reaktionsmischung wie zuvor beschrieben kontaktiert. Als zweite Deckschicht eignen sich beispielsweise Metallbleche oder -folien, insbesondere Aluminiumbleche oder -folien, Mehrschichtdeckschichten, zum Beispiel aus Aluminium und Papier, und Kunststoff-Folien. Die Breite der Deckschicht ist grundsätzlich nicht beschränkt. Beispielsweise kann die Deckschicht eine Breite zwischen 1000 und 1300 mm aufweisen, aber auch 2400 mm Breite sind möglich. Insgesamt kann das erfindungsgemäße Verfahren dann als Doppelbandverfahren angesehen werden.

Ein weiterer Gegenstand der vorliegenden Erfindung ist ein System zur Herstellung von Verbundelementen, umfassend eine Transportvorrichtung für eine erste Deckschicht, eine erste Auftragsvorrichtung für einen Haftvermittler und/oder eine zu einem Haftvermittler reagierende erste Reaktionsmischung auf die Deckschicht und eine zweite Auftragsvorrichtung für eine zu einem Polyurethan-/Polyisocyanurat-Schaum reagierende zweiten Reaktionsmischung auf die Deckschicht. Das System umfasst weiterhin eine Steuereinheit, welche eingerichtet ist, um ein Verfahren gemäß einem der vorliegenden Erfindung ablaufen zu lassen. Vorzugsweise ist die erste Auftragsvorrichtung eingerichtet, um auf Anweisung der Steuereinheit gemäß einem vorbestimmten Muster:

einen einzelnen Tropfen einer ersten Komponente ausgewählt aus Isocyanat-Komponente und gegenüber Isocyanaten reaktiven Komponente, entsprechend dem vorbestimmten Muster, aus einer Düse auf die erste Deckschicht aufzutragen und

einen einzelnen Tropfen einer zweiten Komponente, welche die andere Komponente ausgewählt aus Isocyanat-Komponente und gegenüber Isocyanaten reaktiven Komponente darstellt, entsprechend dem vorbestimmten Muster, aus einer Düse auf einen zuvor aufgetragenen Tropfen der ersten Komponente aufzutragen, so dass der zuvor aufgetragene Tropfen der ersten Komponente zumindest teilweise von dem Tropfen der zweiten Komponente kontaktiert wird.

Hinsichtlich Details zum Auftrag der Tropfen wird zur Vermeidung von Wiederholungen auf die vorstehenden Ausführungen zum erfindungsgemäßen Verfahren verwiesen. Die erste Auftragsvorrichtung kann beispielsweise ein Druckkopf sein, welcher auf einem Roboterarm angeordnet ist. Eine weitere Möglichkeit ist, dass der Druckkopf auf einer Traverse über der Deckschicht und quer zur Bewegungsrichtung der Deckschicht angeordnet ist. Durch eine lineare Bewegung des Druckkopfs in Verbindung mit der Bewegung der Deckschicht lassen sich so auf einfache Weise Wellenmuster für den 2K-Haftvermittler auf der Deckschicht erzeugen. Auch kann sich der Druckkopf über die gesamte Breite des Auftragsbereiches erstrecken. Er ist somit fest installiert und muss nicht mehr bewegt werden.

Selbstverständlich kann das System auch als kontinuierlich arbeitende Doppelbandanlage konfiguriert sein. Hierbei ist es freigestellt, ob die zweite Deckschicht ebenfalls mit einem Haftvermittler versehen wird. Ein allgemeines Schema einer Doppelbandanlage ist in FIG. 1 von EP 1593438 B1 gezeigt.

**Patentansprüche**

1. Verfahren zur Herstellung von Verbundelementen, umfassend die Schritte:

    1) Bereitstellen einer ersten Deckschicht;
    2) Auftragen einer Haftvermittlerkomponente auf die erste Deckschicht, wobei die Haftvermittlerkomponente einen Ein-Komponenten-Haftvermittler und/oder eine zu einem Haftvermittler reagierende erste Reaktionsmischung umfasst
    und wobei die erste Reaktionsmischung aus einer Mehrzahl von Komponenten erhalten wird, wobei wenigstens eine Isocyanat-Komponente und wenigstens eine gegenüber Isocyanaten reaktive Komponente hierfür eingesetzt werden;
    3) Auftragen einer zu einem Polyurethan-/Polyisocyanurat-Schaum reagierenden zweiten Reaktionsmischung auf die erste Deckschicht, so dass die auf die erste Deckschicht aufgetragene Haftvermittlerkomponente wenigstens teilweise von der zweiten Reaktionsmischung kontaktiert wird;

    **dadurch gekennzeichnet, dass**
    die Haftvermittlerkomponente in einem vorbestimmten Muster auf die erste Deckschicht aufgetragen wird,
    für den Fall, dass in Schritt 2) ein Ein-Komponenten-Haftvermittler aufgetragen wird:
    der Ein-Komponenten-Haftvermittler in Form einzelner Tropfen, auf Anweisung einer Steuereinheit, aus einer Düse ausgestoßen wird, bis das vorbestimmte Muster aufgetragen ist;
    für den Fall, dass in Schritt 2) eine erste Reaktionsmischung aufgetragen wird, das Auftragen der ersten Reaktionsmischung auf die erste Deckschicht in Schritt 2) die Schritte umfasst:

    2a) Auftragen eines Tropfens einer ersten Komponente ausgewählt aus denjenigen Komponenten, welche für die erste Reaktionsmischung eingesetzt werden, entsprechend dem vorbestimmten Muster, auf die erste Deckschicht;
    2b) Auftragen eines Tropfens einer weiteren Komponente ausgewählt aus denjenigen Komponenten, welche für die erste Reaktionsmischung eingesetzt werden, entsprechend dem vorbestimmten Muster, auf einen zuvor aufgetragenen Tropfen einer anderen Komponente der ersten Reaktionsmischung, so dass ein zuvor aufgetragener Tropfen einer anderen Komponente zumindest teilweise kontaktiert wird;
    2c) Wiederholen der Schritte 2a) und 2b), bis das vorbestimmte Muster unter Einsatz aller Komponenten der ersten Reaktionsmischung aufgetragen ist;

    wobei in Schritt 2a) und/oder Schritt 2b) das Auftragen der Tropfen derart erfolgt, dass auf Anweisung einer Steuereinheit ein einzelner Tropfen aus einer Düse ausgestoßen wird.

2. Verfahren gemäß Anspruch 1, wobei die erste Reaktionsmischung aus einer Isocyanat-Komponente und einer gegenüber Isocyanaten reaktiven Komponente erhalten wird und
   das Auftragen der ersten Reaktionsmischung auf die erste Deckschicht in Schritt 2) die Schritte umfasst:

    2a) Auftragen eines Tropfens einer ersten Komponente ausgewählt aus Isocyanat-Komponente und gegenüber Isocyanaten reaktiven Komponente, entsprechend dem vorbestimmten Muster, auf die erste Deckschicht;
    2b) Auftragen eines Tropfens einer zweiten Komponente, welche die andere Komponente ausgewählt aus Isocyanat-Komponente und gegenüber Isocyanaten reaktiven Komponente darstellt, entsprechend dem vorbestimmten Muster, auf einen zuvor aufgetragenen Tropfen der ersten Komponente, so dass der zuvor aufgetragene Tropfen der ersten Komponente zumindest teilweise von dem Tropfen der zweiten Komponente kontaktiert wird;
    2c) Wiederholen der Schritte 2a) und 2b), bis das vorbestimmte Muster der Tropfen aufgetragen ist;

   wobei in Schritt 2a) und/oder Schritt 2b) das Auftragen des Tropfens derart erfolgt, dass auf Anweisung einer Steuereinheit ein einzelner Tropfen aus einer Düse ausgestoßen wird.

3. Verfahren gemäß Anspruch 1 oder 2, wobei die Haftvermittlerkomponente mit einer Flächendichte von $\geq 10$ g/m$^2$ bis 200 g/m$^2$ auf die erste Deckschicht aufgetragen wird.

4. Verfahren gemäß einem der vorhergehenden Ansprüche, wobei die Haftvermittlerkomponente mit einem Bedeckungsgrad von $\geq 10\%$ bis $\leq 90\%$ auf die erste Deckschicht aufgetragen wird.

**5.** Verfahren gemäß einem der vorhergehenden Ansprüche, wobei das Volumenverhältnis und/oder die Frequenz der in Schritt 2a) und 2b) aufgetragenen Tropfen sich zeitlich verändern.

**6.** Verfahren gemäß einem der vorhergehenden Ansprüche, wobei die erste Reaktionsmischung eine Isocyanatkomponente, eine erste gegenüber Isocyanaten reaktive Komponente und eine zweite gegenüber Isocyanaten reaktive Komponente aufweist und wobei die erste gegenüber Isocyanaten reaktive Komponente und die zweite gegenüber Isocyanaten reaktive Komponente jeweils für sich betrachtet eine unterschiedliche Reaktionsgeschwindigkeit mit der Isocyanat-Komponente aufweisen.

**7.** Verfahren gemäß einem der vorhergehenden Ansprüche, wobei das vorbestimmte Muster, in dem die erste Reaktionsmischung auf die erste Deckschicht aufgetragen wird, ausgewählt ist aus Linien, Wellen, Punkten oder eine Kombination hiervon.

**8.** Verfahren gemäß einem der vorhergehenden Ansprüche, wobei in Schritt 2a) und/oder 2b) eine Mehrzahl von Düsen in einem Druckkopf angeordnet ist.

**9.** Verfahren gemäß einem der vorhergehenden Ansprüche, wobei in Schritt 2a) und/oder 2b) die Düse, aus der der Tropfen ausgestoßen wird, als durch ein durch die Steuereinheit ansteuerbares Nadelventil ausgestaltet ist.

**10.** Verfahren gemäß einem der vorhergehenden Ansprüche, wobei die erste Deckschicht sich wenigstens während des Schritts 2) bewegt.

**11.** Verfahren gemäß einem der vorhergehenden Ansprüche, wobei in der ersten Reaktionsmischung die erste Komponente eine höhere Viskosität aufweist als die zweite Komponente.

**12.** Verfahren gemäß einem der vorhergehenden Ansprüche, wobei in der ersten Reaktionsmischung die Isocyanat-Komponente monomeres und/oder polymeres 4,4'-MDI umfasst und die gegenüber Isocyanaten reaktive Komponente ein Propylenglycol-Propylenoxid-Polyetherpolyol und/oder ein auf Toluylendiamin gestartetes Ethylenoxid-Propylenoxid-Polyetherpolyol umfasst.

**13.** Verfahren gemäß einem der vorhergehenden Ansprüche, wobei nach Schritt 3) der Schritt 4) durchgeführt wird:
4) Kontaktieren der zu einem Polyurethan-/Polyisocyanurat-Schaum reagierenden zweiten Reaktionsmischung mit einer zweiten Deckschicht.

**14.** Verfahren gemäß Anspruch 13, wobei in Schritt 4) die zweite Deckschicht auf der der zweiten Reaktionsmischung zugewandten Seite mit einem Haftvermittler und/oder einer zu einem Haftvermittler reagierenden Reaktionsmischung wie in Ansprüchen 1 bis 13 beschrieben kontaktiert wird.

**15.** System zur Herstellung von Verbundelementen, umfassend eine Transportvorrichtung für eine erste Deckschicht, eine erste Auftragsvorrichtung für einen Haftvermittler und/oder eine zu einem Haftvermittler reagierende erste Reaktionsmischung auf die Deckschicht und eine zweite Auftragsvorrichtung für eine zu einem Polyurethan-/Polyisocyanurat-Schaum reagierende zweiten Reaktionsmischung auf die Deckschicht,
**dadurch gekennzeichnet, dass**
das System weiterhin eine Steuereinheit umfasst, welche eingerichtet ist, um ein Verfahren gemäß einem der Ansprüche 1 bis 14 ablaufen zu lassen.

**Claims**

**1.** Process for producing composite elements, comprising the steps of:

1) providing a first outerlayer;
2) applying an adhesion promoter component to the first outerlayer, wherein the adhesion promoter component comprises a one-component adhesion promoter and/or a first reaction mixture which reacts to afford an adhesion promoter
and wherein the first reaction mixture is obtained from a plurality of components, wherein at least one isocyanate component and at least one isocyanate-reactive component are used therefor;
3) applying a second reaction mixture which reacts to afford a polyurethane/polyisocyanurate foam to the first outerlayer, so that the adhesion promoter component applied to the first outerlayer is at least partially contacted by the second reaction mixture;

**characterized in that**
the adhesion promoter component is applied to the first outerlayer in a predetermined pattern,
in the case where in step 2) a one-component adhesion promoter is applied:
the one-component adhesion promoter is ejected from a nozzle in the form of individual droplets under instruction from a control unit until the predetermined pattern has been applied; in the case where in step 2) a first reaction mixture is applied the application of the first reaction mixture to the first outerlayer in step 2) comprises the steps of:

2a) applying a droplet of a first component selected from the components employed for the first reaction mixture according to the predetermined pattern to the first outerlayer;
2b) applying a droplet of a further component selected from the components employed for the first reaction mixture according to the predetermined pattern to a previously applied droplet of another component of the first reaction mixture, so that a previously applied droplet of another component is at least partially contacted;
2c) repeating the steps 2a) and 2b) until the predetermined pattern has been applied using all components of the first reaction mixture;

wherein in step 2a) and/or step 2b) the application of the droplets is carried out such that under instruction from a control unit an individual droplet is ejected from a nozzle.

2. Process according to Claim 1, wherein the first reaction mixture is obtained from an isocyanate component and an isocyanate-reactive component and
the application of the first reaction mixture to the first outerlayer in step 2) comprises the steps of:

2a) applying a droplet of a first component selected from isocyanate component and isocyanate-reactive component according to the predetermined pattern to the first outerlayer;
2b) applying a droplet of a second component which constitutes the other component selected from isocyanate component and isocyanate-reactive component according to the predetermined pattern to a previously applied droplet of the first component, so that the previously applied droplet of the first component is at least partially contacted by the droplet of the second component;
2c) repeating the steps 2a) und 2b) until the predetermined pattern of the droplets has been applied;

wherein in step 2a) and/or step 2b) the application of the droplet is carried out such that under instruction from a control unit an individual droplet is ejected from a nozzle.

3. Process according to Claim 1 or 2, wherein the adhesion promoter component is applied to the first outerlayer with an areal density of $\geq 10$ g/m$^2$ to 200 g/m$^2$.

4. Process according to any of the preceding claims, wherein the adhesion promoter component is applied to the first outerlayer with a coverage of $\geq 10\%$ to $\leq 90\%$.

5. Process according to any of the preceding claims, wherein the volume ratio and/or the frequency of the droplets applied in step 2a) and 2b) change over time.

6. Process according to any of the preceding claims, wherein the first reaction mixture comprises an isocyanate component, a first isocyanate-reactive component and a second isocyanate-reactive component and wherein the first isocyanate-reactive component and the second isocyanate-reactive component each have a different reaction rate with the isocyanate component when considered in isolation.

7. Process according to any of the preceding claims, wherein the predetermined pattern in which the first reaction mixture is applied to the first outerlayer is selected from lines, waves, points or a combination thereof.

8. Process according to any of the preceding claims, wherein in step 2a) and/or 2b) a plurality of nozzles is arranged in a printing head.

9. Process according to any of the preceding claims, wherein in step 2a) and/or 2b) the nozzle from which the droplet is ejected is in the form of a needle valve controllable by a control unit.

**10.** Process according to any of the preceding claims, wherein the first outerlayer moves at least during the step 2).

**11.** Process according to any of the preceding claims, wherein in the first reaction mixture the first component has a higher viscosity than the second component.

**12.** Process according to any of the preceding claims, wherein in the first reaction mixture the isocyanate component comprises monomeric and/or polymeric 4,4'-MDI and the isocyanate-reactive component comprises a propylene glycol-propylene oxide polyether polyol and/or a tolylenediamine-started ethylene oxide-propylene oxide polyether polyol.

**13.** Process according to any of the preceding claims, wherein step 3) is followed by step 4):
4) contacting the second reaction mixture which reacts to afford a polyurethane/polyisocyanurate foam with a second outerlayer.

**14.** Process according to Claim 13, wherein in step 4) the second outerlayer is contacted on the side facing the second reaction mixture with an adhesion promoter and/or a reaction mixture which reacts to afford an adhesion promoter as described in Claims 1 to 13.

**15.** System for producing composite elements comprising a transport apparatus for a first outerlayer, a first application apparatus for applying an adhesion promoter and/or a first reaction mixture which reacts to afford an adhesion promoter to the outerlayer and a second application apparatus for applying a second reaction mixture which reacts to afford a polyurethane/polyisocyanurate foam to the outerlayer,
**characterized in that**
the system further comprises a control unit adapted for running a process according to any of Claims 1 to 14.

## Revendications

**1.** Procédé de fabrication d'éléments composites, comprenant les étapes suivantes :

1) la fourniture d'une première couche de recouvrement ;
2) l'application d'un composant promoteur d'adhésion sur la première couche de recouvrement, le composant promoteur d'adhésion comprenant un promoteur d'adhésion monocomposant et/ou un premier mélange réactionnel réagissant en un promoteur d'adhésion,
et dans lequel le premier mélange réactionnel est obtenu à partir d'une pluralité de composants, au moins un composant isocyanate et au moins un composant réactif avec les isocyanates étant utilisés pour cela ;
3) l'application d'un deuxième mélange réactionnel réagissant en une mousse de polyuréthane/polyisocyanurate sur la première couche de recouvrement, de telle sorte que le composant promoteur d'adhésion appliqué sur la première couche de recouvrement soit au moins partiellement contacté par le deuxième mélange réactionnel ;

**caractérisé en ce que**
le composant promoteur d'adhésion est appliqué selon un motif prédéterminé sur la première couche de recouvrement,
dans le cas où un promoteur d'adhésion monocomposant est appliqué dans l'étape 2) :

le promoteur d'adhésion monocomposant est éjecté d'une buse sous la forme de gouttes individuelles, sur ordre d'une unité de commande, jusqu'à ce que le motif prédéterminé soit appliqué ;
dans le cas où un premier mélange réactionnel est appliqué dans l'étape 2), l'application du premier mélange réactionnel sur la première couche de recouvrement dans l'étape 2) comprend les étapes suivantes :

2a) l'application d'une goutte d'un premier composant choisi parmi les composants qui sont utilisés pour le premier mélange réactionnel, conformément au motif prédéterminé, sur la première couche de recouvrement ; 2b) l'application d'une goutte d'un composant supplémentaire choisi parmi les composants qui sont utilisés pour le premier mélange réactionnel, conformément au motif prédéterminé, sur une goutte appliquée précédemment d'un autre composant du premier mélange réactionnel, de telle sorte qu'une goutte appliquée précédemment d'un autre composant soit au moins partiellement contactée ;
2c) la répétition des étapes 2a) et 2b) jusqu'à ce que le motif prédéterminé soit appliqué en utilisant tous les composants du premier mélange réactionnel ;

dans l'étape 2a) et/ou l'étape 2b), l'application des gouttes ayant lieu de telle sorte qu'une goutte individuelle soit éjectée d'une buse sur ordre d'une unité de commande.

2. Procédé selon la revendication 1, dans lequel le premier mélange réactionnel est obtenu à partir d'un composant isocyanate et d'un composant réactif avec les isocyanates, et l'application du premier mélange réactionnel sur la première couche de recouvrement dans l'étape 2) comprend les étapes suivantes :

2a) l'application d'une goutte d'un premier composant choisi parmi un composant isocyanate et un composant réactif avec les isocyanates, conformément au motif prédéterminé, sur la première couche de recouvrement ;
2b) l'application d'une goutte d'un deuxième composant, qui est l'autre composant choisi parmi un composant isocyanate et un composant réactif avec les isocyanates, conformément au motif prédéterminé, sur une goutte appliquée précédemment du premier composant, de telle sorte que la goutte appliquée précédemment du premier composant soit au partiellement contactée par la goutte du deuxième composant ;
2c) la répétition des étapes 2a) et 2b) jusqu'à ce que le motif prédéterminé des gouttes soit appliqué ;

dans l'étape 2a) et/ou l'étape 2b), l'application de la goutte ayant lieu de telle sorte qu'une goutte individuelle soit éjectée d'une buse sur ordre d'une unité de commande.

3. Procédé selon la revendication 1 ou 2, dans lequel le composant promoteur d'adhésion est appliqué en une densité de surface de $\geq 10$ g/m$^2$ à 200 g/m$^2$ sur la première couche de recouvrement.

4. Procédé selon l'une quelconque des revendications précédentes, dans lequel le composant promoteur d'adhésion est appliqué avec un degré de recouvrement de $\geq 10$ % à $\leq 90$ % sur la première couche de recouvrement.

5. Procédé selon l'une quelconque des revendications précédentes, dans lequel le rapport volumique et/ou la fréquence des gouttes appliquées dans l'étape 2a) et 2b) varie temporellement.

6. Procédé selon l'une quelconque des revendications précédentes, dans lequel le premier mélange réactionnel comprend un composant isocyanate, un premier composant réactif avec les isocyanates et un deuxième composant réactif avec les isocyanates, et dans lequel le premier composant réactif avec les isocyanates et le deuxième composant réactif avec les isocyanates présentent, chacun considérés individuellement, une vitesse de réaction différente avec le composant isocyanate.

7. Procédé selon l'une quelconque des revendications précédentes, dans lequel le motif prédéterminé, selon lequel le premier mélange réactionnel est appliqué sur la première couche de recouvrement, est choisi parmi des lignes, des ondulations, des points ou une combinaison de ceux-ci.

8. Procédé selon l'une quelconque des revendications précédentes, dans lequel, dans l'étape 2a) et/ou 2b), une pluralité de buses est agencée dans une tête d'impression.

9. Procédé selon l'une quelconque des revendications précédentes, dans lequel, dans l'étape 2a) et/ou 2b), la buse à partir de laquelle la goutte est éjectée est configurée en tant que soupape à pointeau commandable par l'unité de commande.

10. Procédé selon l'une quelconque des revendications précédentes, dans lequel la première couche de recouvrement se déplace au moins pendant l'étape 2).

11. Procédé selon l'une quelconque des revendications précédentes, dans lequel, dans le premier mélange réactionnel, le premier composant présente une viscosité plus élevée que le deuxième composant.

12. Procédé selon l'une quelconque des revendications précédentes, dans lequel, dans le premier mélange réactionnel, le composant isocyanate comprend du 4,4'-MDI monomère et/ou polymère et le composant réactif avec les isocyanates comprend un propylène glycol-oxyde de propylène-polyéther polyol et/ou un oxyde d'éthylène-oxyde de propylène-polyéther polyol démarré sur de la toluylène diamine.

13. Procédé selon l'une quelconque des revendications précédentes, dans lequel l'étape 4) est réalisée après l'étape 3) :
4) la mise en contact du deuxième mélange réactionnel réagissant en une mousse de polyuréthane/polyisocyanurate

EP 3 648 974 B1

avec une deuxième couche de recouvrement.

14. Procédé selon la revendication 13, dans lequel, dans l'étape 4), la deuxième couche de recouvrement est mise en contact, sur le côté tourné vers le deuxième mélange réactionnel, avec un promoteur d'adhésion et/ou un mélange réactionnel réagissant en un promoteur d'adhésion tel que décrit dans les revendications 1 à 13.

15. Système pour la fabrication d'éléments composites, comprenant un dispositif de transport pour une première couche de recouvrement, un premier dispositif d'application pour un promoteur d'adhésion et/ou un premier mélange réactionnel réagissant en un promoteur d'adhésion sur la couche de recouvrement et un deuxième dispositif d'application pour un deuxième mélange réactionnel réagissant en une mousse de polyuréthane/polyisocyanurate sur la couche de recouvrement,
**caractérisé en ce que**
le système comprend en outre une unité de commande, qui est conçue pour laisser se dérouler un procédé selon l'une quelconque des revendications 1 à 14.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1593438 A
- EP 1516720 A1
- DE 102004022677 A1
- EP 1736324 A2
- WO 2008031517 A1
- EP 2002898 A1
- EP 2910585 A
- EP 1359177 A
- WO 2010043624 A
- EP 1923417 A
- EP 1593438 B1

**In der Beschreibung aufgeführte Nicht-Patentliteratur**

- **IONESCU.** Chemistry and Technology of Polyols for Polyurethanes. Rapra Technology Limited, 2005, 55 ff
- Oligo-Polyols for Elastic Polyurethanes. 263 ff
- Polyester Polyols for Elastic Polyurethanes. 321 ff
- Polyether Polyols for Rigid Polyurethane Foams. 419 ff
- Polyester Polyols for Rigid Polyurethane Foams
- Polyurethane. Kunststoffhandbuch. vol. 7